# EUROPÄISCHE PATENTSCHRIFT

(11) **EP 2 619 039 B1**
(45) Veröffentlichungstag und Bekanntmachung des Hinweises auf die Patenterteilung: **31.12.2014**
(21) Anmeldenummer: 11761259.8
(22) Anmeldetag: 24.08.2011
(51) Int. Cl.: B60R 11/04

(54) **KAMERAEINHEIT FÜR EIN KRAFTFAHRZEUG**
CAMERA UNIT FOR A MOTOR VEHICLE
UNITÉ DE PRISE DE VUES POUR UN VÉHICULE AUTOMOBILE

(30) Priorität: 24.09.2010 DE 102010046396
(43) Veröffentlichungstag der Anmeldung: 31.07.2013
(73) Patentinhaber: Huf Hülsbeck & Fürst GmbH & Co. KG, 42551 Velbert (DE)
(72) Erfinder: BUSCHMANN, Gerd, 42553 Velbert (DE)
(86) Internationale Anmeldenummer: PCT/DE2011/050027
(87) Internationale Veröffentlichungsnummer: WO 2012/037930

(56) Entgegenhaltungen:
- DE-A1-102006 048 373
- DE-A1-102007 052 401
- DE-A1-102008 059 918

## Beschreibung

Die Erfindung betrifft Kameraeinheit mit einem Schutzelement zur bildlichen Erfassung eines Außenbereichs für ein Kraftfahrzeug, die über ein Steuergerät mit einer innerhalb des Kraftfahrzeugs angeordneten Anzeigevorrichtung verbunden ist, wobei die Kameraeinheit in einer inaktiven Betriebsstellung mittels des Schutzelements verdeckt innerhalb einer am Kraftfahrzeug vorgesehenen Ausnehmung angeordnet ist, und die Kameraeinheit und/oder das Schutzelement nach einer Aktivierung eines ersten Betätigungselements, insbesondere durch die Aktivierung des als ersten Betätigungselement ausgebildeten Rückwärtsgangs des Kraftfahrzeugs, durch ein Antriebselement in eine aktive Betriebsstellung zur bildlichen Erfassung des Außenbereichs dienenden Freigabestellung bewegbar ist, und mindestens ein zweites Betätigungselement vorgesehen ist, wobei die Kameraeinheit und/oder das Schutzelement nach einer Aktivierung des zweiten Betätigungselements durch das Antriebselement in die zur bildlichen Erfassung des Außenbereichs geeigneten Freigabestellung bewegbar ist.

Kraftfahrzeuge mit einer Kameraeinheit sind aus dem Stand der Technik weitläufig bekannt. Die Kameraeinheit zur Erfassung des Außenbereichs befindet sich meistens an der Hecklappe, um ein Einparken des Kraftfahrzeugs für den Benutzer zu erleichtern. Man hat jedoch festgestellt, dass das Reinigen der Kameraeinheit nur mit einem erheblichen Aufwand möglich ist, wenn sich diese bei einem inaktiven Zustand in einer an der Heckklappe angeordneten Ausnehmung befindet, die von einem Schutzelement, wie beispielsweise einem Emblem des Kraftfahrzeugherstellers, verdeckt wird. Bei denen im Stand der Technik offenbarten Kraftfahrzeugen wird beim Einlegen eines Rückwärtsganges durch einen Schalthebel mittels eines Antriebselements die Kameraeinheit in eine aktive Betriebsstellung ausgefahren, um den hinter dem Kraftfahrzeug angeordneten Außenbereich zu erfassen. In einer im Kraftfahrzeug angeordneten Anzeigevorrichtung wird der durch die Kameraeinheit erfasste Außenbereich visualisiert. Bei einem nachfolgenden Gangwechsel wird die Kameraeinheit mittels des Antriebselements innerhalb weniger Sekunden wieder zurück in die Ausnehmung eingefahren. Die Kameraeinheit befindet sich dann wieder in ihrer inaktiven Betriebsstellung. Für den Kraftfahrzeugführer ist es nicht möglich auszusteigen, um die Kameraeinheit zu reinigen, weil das Kraftfahrzeug aufweisend ein Automatikgetriebe oder ein Schaltgetriebe bei einem eingelegten Rückwärtsgang ohne Kraftfahrzeugführer (Benutzer) einfach weiterführe. Bei nicht eingelegten Rückwärtsgang weist die Kameraeinheit eine inaktive Betriebsstellung auf, bei welcher die Kameraeinheit durch das Schutzelement verdeckt in der Ausnehmung angeordnet ist. Eine Reinigung, Reparatur oder Austausch der Kameraeinheit ist nur mit einem erhöhten Aufwand möglich, indem das Schutzelement demontiert werden muss.

Des Weiteren ist aus dem Stand der Technik die Offenlegungsschrift DE102009056346A1 bekannt, welche ein Betätigungselement innerhalb des Kraftfahrzeugs offenbart. Mit Hilfe dieses innerhalb des Fahrzeugs angeordneten Betätigungselements lässt sich die Kameraeinheit in Ihre Freigabestellung bewegen. Allerdings wird dazu ein weiteres Betätigungselement am Armaturenbrett vorgesehen.

Aus der gattunsgbildenden DE102008059918A1 ist ein Kraftfahrzeug mit einer Kameravorrichtung bekannt, welche zu Bilderfassung des Außenbereichs des Kraftfahrzeugs dient.

Es ist die Aufgabe der Erfindung, ein Kraftfahrzeug mit einer Kameraeinheit bereitzustellen, bei welchem die am Armaturenbrett vorgesehenen Betätigungselemente reduziert werden, um die Übersicht innerhalb der Fahrgastzelle für den Benutzer zu verbessern.

Die Aufgabe wird dadurch gelöst, dass dass zweite Betätigungselement durch den Benutzer nur außerhalb des Kraftfahrzeugs betätigbar ist. Durch diese Maßnahme ist es möglich auf ein zusätzliches am Armaturenbrett angeordnetes Betätigungselement zu verzichten. Die Übersicht am Armaturenbrett wird für den Benutzer verbessert. Des Weiteren werden die Herstellungskosten für das Kraftfahrzeug reduziert, insbesondere dann, wenn man auf bereits bestehende außerhalb des Fahrzeugs angeordnete Betätigungselemente zurückgreifen kann. Des Weiteren ist unabhängig vom eingelegten Gang die Reinigung, der Austausch oder die Reparatur der Kameraeinheit möglich Wenn der Benutzer des Kraftfahrzeugs beim Rückwärtsfahren auf der Anzeigevorrichtung innerhalb des Kraftfahrzeugs erkennt, dass die Sicht des durch die Kameraeinheit erfassten Außenbereichs durch Schmutzpartikel beeinträchtigt ist, so kann er bei laufendem oder auch bei ruhendem Motor den als erstes Betätigungselements ausgebildeten Schalthebel bei einem Automatikgetriebe auf die Parkposition einstellen bzw. bei einem Schaltgetriebe den als erstes Betätigungselement ausgebildeten Schalthebel in die Leerlaufposition einstellen, ggf. die Handbremse anziehen und nach der Betätigung des zweiten Betätigungselements die Kameraeinheit mittels des Antriebselements in eine Freigabestellung bewegen. Bei der Freigabestellung befindet sich die Kameraeinheit in der aktiven Betriebsstellung, in welcher die bildliche Erfassung des Außenbereichs möglich ist. In dieser aktiven Betriebsstellung ist die Kameraeinheit aber auch gleichzeitig in einer für den Benutzer idealen und leicht zugänglichen Position, um diese zu reinigen oder ggf. im Rahmen einer Reparatur auszutauschen. Die Kameraeinheit ist in ihrer aktiven Betriebsstellung zwangsweise für den Benutzer sichtbar, weil die Kameraeinheit in ihrer aktiven Betriebsstellung den Außenbereich weitwinklig bildlich erfassen muss, um den Benutzer mittels der Anzeigevorrichtung alle hinter dem Fahrzeug angeordneten Gegenstände oder Personen zu visualisieren.

In einer bevorzugten Ausführungsform der Erfindung ist vorgesehen, dass die Kameraeinheit und/oder das Schutzelement durch die Betätigung des zweiten Betätigungselements mittels des Antriebselements in der Freigabestellung verbleibt.

Der wesentliche Vorteil hierbei liegt darin, dass der Benutzer genügend Zeit hat, die Reparatur, den Austausch oder die Reinigung der Kameraeinheit durchzuführen.

Bei einer weiteren vorteilhaften Ausgestaltung des Gegenstandes der Erfindung ist vorgesehen, dass bei der Betätigung des zweiten Betätigungselements das Kraftfahrzeug einen ruhenden Zustand aufweist.
Durch diese Maßnahme ist sichergestellt, dass der die Kameraeinheit reinigende Benutzer, welcher sich vor oder hinter dem Kraftfahrzeug befindet nicht von einem Kraftfahrzeugführer des Kraftfahrzeugs versehentlich überfahren wird. Die Sicherheitsanforderungen werden durch diese Maßnahme in Vorteilhafterweise verbessert.

Sehr einfach und kostengünstig ist der konstruktive Aufbau, wenn das Antriebselement als Elektromotor ausgebildet ist.

Nach einer weiteren bevorzugten Ausführungsform der Erfindung ist vorgesehen, dass das Antriebselement als Kraftspeicher ausgebildet ist. Der Kraftspeicher bietet den Vorteil, dass auf elektrischen Strom verzichtet wird, und dadurch der Stromverbrauch des Kraftfahrzeugs verringert wird. Ferner wird auf elektronische Bauteile und Leitungen verzichtet, wodurch die Konstruktion einfacher und kostengünstiger ist. Nach der Betätigung des zweiten Betätigungselements wird die Kameraeinheit und/oder das Schutzelement durch das Antriebselements in die aktive Betriebsstellung bewegt, indem der beispielsweise als Federelement ausgebildeten Kraftspeicher sich entspannt. Danach erfolgt die Reinigung, der Austausch oder die Reparatur der Kameraeinheit durch den Benutzer. Anschließend wird durch die manuelle Betätigung des zweiten Betätigungselements durch den Benutzer die Kameraeinheit und/oder das Schutzelement wieder zurück in die inaktive Betriebsstellung bewegt. Dabei wird der Kraftspeicher wieder vorgespannt. Bei dieser Vorgehensweise wird Energie eingespart und eine Reinigung ist unabhängig vom Ladungszustand der Kraftfahrzeugbatterie möglich. Bei einer weiteren vorteilhaften Ausgestaltung des Gegenstandes der Erfindung ist vorgesehen, dass das zweite Betätigungselement an einer Tür oder Klappe, insbesondere an einer Heckklappe angeordnet ist.

Nach einer weiteren Ausgestaltung des Gegenstandes der Erfindung ist vorgesehen, dass das zweite Betätigungselement als ein Heckbetätiger ausgebildet ist, welcher zur Öffnung der Heckklappe dient. Der wesentliche Vorteil liegt darin, dass in kostengünstige Art und Weise auf ein zusätzliches Bauteil, insbesondere am Armaturenbrett, verzichtet wird. Zum Einem weist der Heckbetätiger die Funktion zum Öffnen und/oder Schließen der Heckklappe auf und zum Anderen übernimmt der Heckbetätiger die Funktion des zweiten Betätigungselements, nämlich nach dessen Betätigung die Kameraeinheit in ihre aktive oder inaktive Betriebsstellung zu bewegen. Dadurch vereinfacht sich ebenfalls der konstruktive Aufbau der Kameraeinheit, weil einem Bauteil, insbesondere das zweite Betätigungselement, zwei Funktionen zugeordneten sind. Auf zusätzliche Betätigungselemente wird in kostengünstiger Art und Weise verzichtet. Es muss lediglich die bereits, ggf. vorhandene Steuereinheit mit einer neuen Software versehen werden.

Sehr einfach und kostengünstig ist der konstruktive Aufbau, wenn das Schutzelement als zweites Betätigungselement ausgebildet ist. Auch bei dieser Lösung liegt der Vorteil darin, dass auf ein zusätzliches Bauteil verzichtet wird, weil zum Einem das Schutzelement die Kameraeinheit vor Beschädigungen schützt und zum Anderen das Schutzelement die Funktion des zweiten Betätigungselements übernimmt. Ferner kann das Schutzelement auch mit einem Emblem eines Automobilherstellers versehen werden.

Nach einer weiteren Ausführungsform ist vorgesehen, dass das zweite Betätigungselement als Taste auf einem dem Kraftfahrzeug zugeordneten mobilen Funkschlüssel ausgebildet ist. Durch diese Maßnahme gelingt es, bereits von einem vom Kraftfahrzeug entfernten Ort das Antriebselement zu betätigen, um die Kameraeinheit durch das Antriebselement in die aktive Betriebsstellung zu bewegen. Somit befindet sich bereits bei der Ankunft des Benutzers vor der Kameraeinheit diese in ihrer Freigabestellung, so dass der Benutzer direkt mit der Reinigung, dem Austausch oder der Reparatur beginnen kann. Dabei ist es auch von Vorteil, wenn die Taste auf der Funkfembedienung ein entsprechendes Symbol, beispielsweise eine Kamera aufweist. Es ist aber auch möglich, die Taste zur Öffnung der Hecklappe auf der Funkfernbedienung mit der Funktion des zweiten Betätigungselements zu versehen.

Nach einer weiteren bevorzugten Ausführungsform der Erfindung ist vorgesehen, dass zur Aktivierung des Antriebselements ein Drücken des zweiten Betätigungselements von mindestens ein bis zwei Sekunden erforderlich ist. Wenn dem zweiten Betätigungselement zwei Funktionen zugeordnet sind, dann ist durch diese Maßnahme ausgeschlossen, dass beide dem Betätigungselement zugeordneten Funktionen gleichzeitig auslösen. Somit ist bei der Betätigung des zweiten Betätigungselements, welches beispielsweise als Heckbetätiger ausgebildet ist, eine Bewegung der Kameraeinheit mittels des Antriebselements in die aktive Betriebsstellung ausgeschlossen. Dies ist wünschenswert, wenn der Benutzer eine bewusste Handlung durchführen möchte, insbesondere dann, wenn der Benutzer keinen Bedarf zur Reinigung oder Reparatur der Kameraeinheit hat, sondern lediglich die Heckklappe mittels des Heckbetätigers öffnen möchte.

Nach einer nächsten bevorzugten Ausführungsform ist vorgesehen, dass die Kameraeinheit und/oder das Schutzelement durch die wiederholte Betätigung des zweiten Betätigungselements durch das Antriebselement zurück in die inaktive Betriebsstellung bewegbar ist. Dies bietet den Vorteil, dass der Benutzer eine bewusste Handlung durchführt. Der Benutzer entscheidet selbst, wann genau der Reinigungs- oder Austauschvorgang der Kameraeinheit abgeschlossen ist und die Kameraeinheit und/oder das Schutzelement durch das Antriebselement wieder zurück in die inaktive Betriebsstellung bewegt wird.

Nach einer weiteren Ausführungsform der Erfindung ist vorgesehen, dass dass nach einer vorbestimmten Zeitdauer, insbesondere nach mindestens ein bis drei Minuten, ohne eine Betätigung des zweiten Betätigungselements die Kameraeinheit und/oder das Schutzelement durch das Antriebselement zurück in die inaktive Betriebsstellung bewegbar ist. Wenn der Benutzer vergisst die Kameraeinheit und/oder das Schutzelement in seine inaktive Betriebsstellung zu bewegen, wird die Kameraeinheit und/oder das Schutzelement ohne eine Betätigung des zweiten Betätigungselements automatisch in seine inaktive Betriebsstellung bewegt. Ansonsten wäre es möglich, dass die Kameraeinheit in ihrer aktiven Betriebsstellung bei einer Fahrt des Kraftfahrzeugs, insbesondere bei einer erhöhten Geschwindigkeit des Kraftfahrzeugs durch aufwirbelnde Steinchen und Schmutzpartikel beschädigt wird, weil die Kameraeinheit im aktiven Betriebszustand durch das Schutzelement zumindest nur teilweise verdeckt wird.

Nach einer weiteren Ausführungsform ist vorgesehen, dass die Kameraeinheit ohne eine Betätigung des zweiten Betätigungselements beim Schließen der Heckklappe selbstständig in ihre inaktive Betriebsstellung bewegbar ist.
Dem Kraftfahrzeug ist in der Regel mindestens ein Sensor zugeordnet, welcher den Öffnungs-/ und/oder Schließzustand der Türen, Klappen und dgl. erkennt, um beispielsweise dem Benutzer anzuzeigen, dass die Türen oder Klappen, insbesondere die Heckklappe verschlossen ist. Wenn dieser Sensor dazu benutzt wird, um das Antriebselement der Kameraeinheit anzusteuern, kann auf zusätzliche Bauteile verzichtet wird. Der Schließvorgang wird für den Benutzer ebenfalls weiter vereinfacht, weil er keine weitere Handlung durchführen muss. Beim Schließen der Heckklappe wird die Kameraeinheit wieder automatisch zurück in die inaktive Betriebsstellung bewegt.

Für den Benutzer ist es sehr komfortabel, wenn das zweite Betätigungselement als kapazitiver Sensor, insbesondere als kapazitiver Fußschalter, ausgebildet ist, welcher in der Heckklappe oder im Stoßfänger angeordnet ist. Dabei wird in einer weiteren bevorzugten Ausführungsform die Kameraeinheit erst nach einer zweiten Betätigung des kapazitiven Fußschalters in ihre Freigabestellung bewegt. Dies weist den Vorteil auf, das im Rahmen einer bewussten Handlung der Benutzer entscheiden kann, ob er die Heckklappe öffnen möchte, oder ob er lediglich die Kameraeinheit zur Reinigung oder Reparatur in ihre Freigabestellung bewegen möchte.

In den Figuren ist die Erfindung anhand von zwei Ausführungsbeispielen beschrieben. Es zeigen:
- Fig. 1: ein Kraftfahrzeug mit einer in der Heckklappe angeordneten Kameraeinheit,
- Fig. 2: eine Schnittansicht der in einer Ausnehmung der Heckklappe angeordneten Kameraeinheit in einer inaktiven Betriebsstellung gemäß einer ersten Ausführungsform
- Fig. 3: eine Schnittansicht der in einer Ausnehmung der Heckklappe angeordneten Kameraeinheit bei einer Betätigung eines zweiten Betätigungselements gemäß der ersten Ausführungsform
- Fig. 4: eine Schnittansicht der in der Ausnehmung der Heckklappe angeordneten Kameraeinheit in einer aktiven Betriebsstellung gemäß der ersten Ausführungsform,
- Fig. 5: eine Draufsicht eines Moduls aufweisend einen Heckbetätiger und eine Kameraeinheit in einer inaktiven Betriebsstellung gemäß einer zweiten Ausführungsform,
- Fig. 6: eine Ansicht des Moduls von unten aufweisend die Kameraeinheit in der inaktiven Betriebsstellung gemäß der zweiten Ausführungsform
- Fig. 7: eine Schnittansicht A-A der Kameraeinheit in der inaktiven Betriebsstellung gemäß der zweiten Ausführungsform
- Fig. 8: eine Ansicht des Moduls von unten aufweisend die Kameraeinheit in einer aktiven Betriebsstellung gemäß der zweiten Ausführungsform
- Fig. 9: eine Schnittansicht B-B der Kameraeinheit gemäß der zweiten Ausführungsform in der aktiven Betriebsstellung

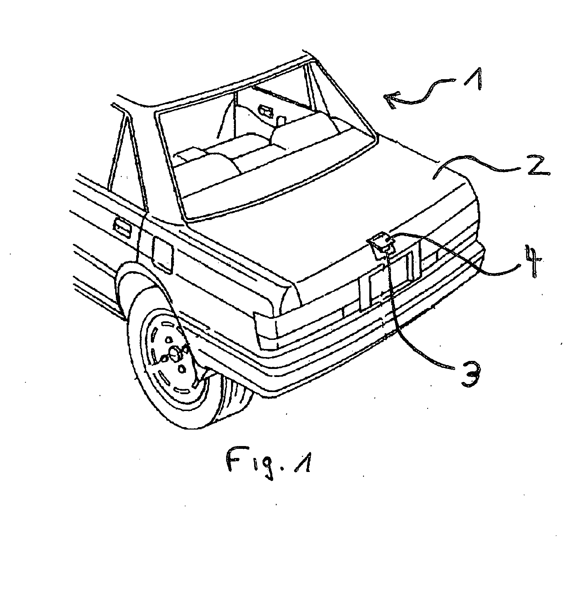

In der Figur 1 ist schematisch ein hinterer Bereich eines Kraftfahrzeugs 1 gezeigt, welches mit einer in einer Heckklappe 2 angeordneten als Rückfahrkamera ausgebildeten Kameraeinheit 3 versehen ist. Die Kameraeinheit 3 umfasst im Wesentlichen einen Bildsensor und ein Objektiv, die in einem Gehäuse angeordnet sind. Der Bildsensor ist in diesem Ausführungsbeispiel als CCD-Sensor ausgebildet. Grundsätzlich erfasst die Kameraeinheit 3 den Außenbereich, wobei die Kameraeinheit 3 über ein Steuergerät mit einer im Kraftfahrzeug 1 nicht gezeigten Anzeigevorrichtung verbunden ist, welche zur Visualisierung eines hinter dem Kraftfahrzeug 1 angeordneten Außenbereichs dient. Dadurch wird der Ein- und Ausparkvorgang für den Benutzer erleichtert, da er Gegenstände oder Personen hinter dem Kraftfahrzeug 1 leichter erkennt, wenn sich diese außerhalb des Erfassungsbereichs der Seitenspiegel und eines innerhalb des Fahrzeugs 1 angeordneten Innen'spiegels befinden. Der Kameraeinheit 3 ist ein um eine erste Achse 4.1 schwenkbar gelagertes Schutzelement 4 zugeordnet, welches während der Fahrt die Kameraeinheit 3 vor Beschädigungen und Verschmutzungen durch aufgewirbelte Schmutzpartikel oder Steinchen schützt.

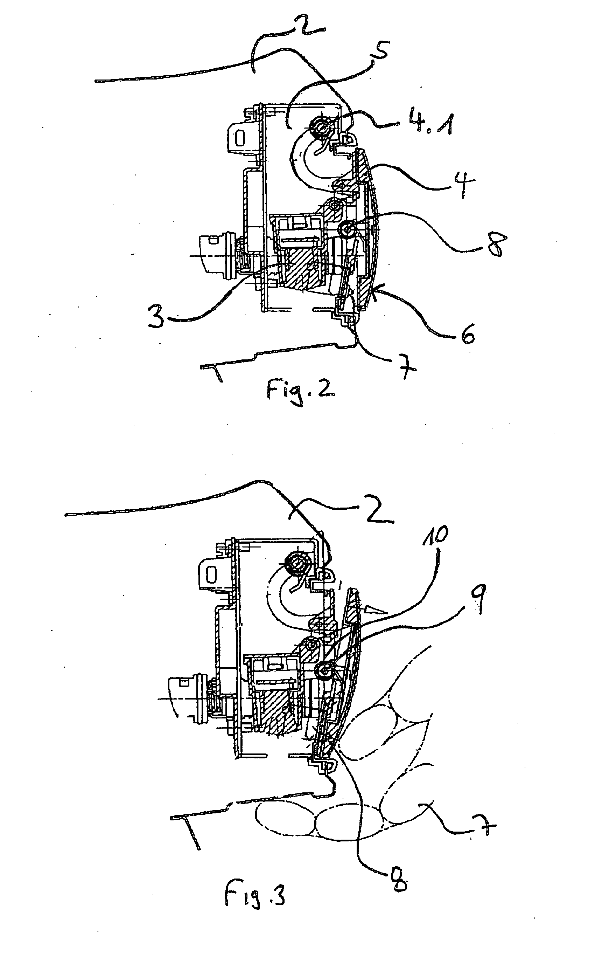

In der Figur 2 ist die Kameraeinheit 3 in einer inaktiven Betriebsstellung gezeigt. Dabei wird die Kameraeinheit 3 innerhalb einer in der Heckklappe 2 angeordneten Ausnehmung 5 von dem Schutzelement 4 verdeckt.

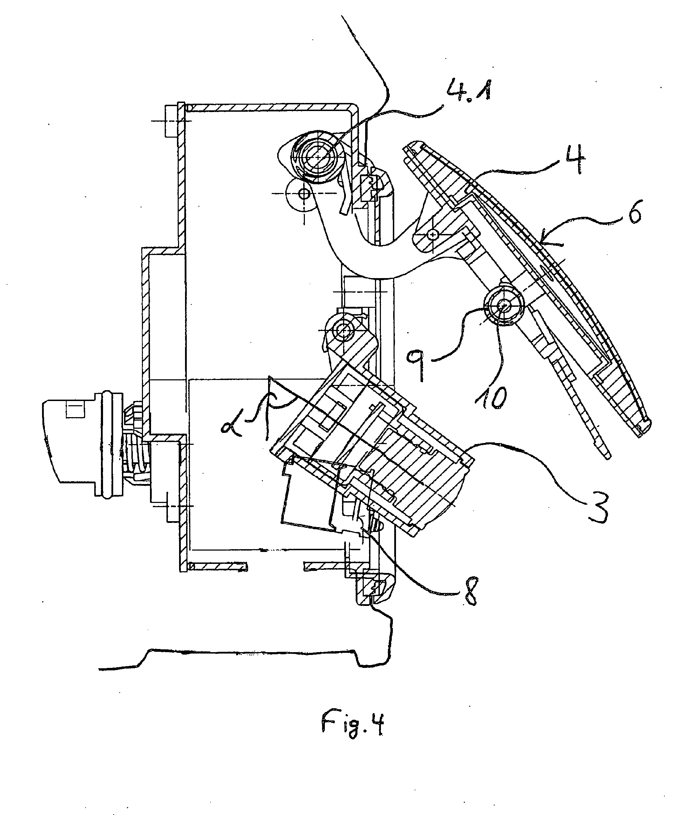

Eine aktive Betriebsstellung der Kameraeinheit 3 ist in Figur 4 visualisiert. Hierbei wird die Kameraeinheit 3 und das Schutzelement 4 durch ein Einlegen eines Ganges mittels eines als Schalthebel ausgebildeten ersten Betätigungselements durch ein Antriebselement aktiviert. Das als Elektromotor ausgebildete Antriebselement bewegt dabei die Kameraeinheit 3 und das Schutzelement 4 in eine Freigabestellung zur bildlichen Erfassung des hinter dem Kraftfahrzeug 1 angeordneten Außenbereichs, um bei einem Einparkvorgang ein Anstoßen des Kraftfahrzeugs 1 gegen Hindernisse oder Personen zu vermeiden. Die Kameraeinheit 3 und das Schutzelement 4 befinden sich dann in der aktiven Betriebsstellung. Wie in Figur 4 gezeigt, ragt die Kameraeinheit 3 in einem geneigten Winkel α aus der Ausnehmung 5 heraus. Erfindungsgemäß ist ein zweites Betätigungselement 6 vorgesehen, welches, insbesondere bei einem ruhendem Kraftfahrzeug 1, betätigbar ist. Die Kameraeinheit 3 wird durch die Betätigung des zweiten Betätigungselements 6 durch das Antriebselement in die Freigabestellung bewegt. Diese Freigabestellung entspricht im Wesentlichen der Freigabestellung, welche die Kameraeinheit 3 nach Betätigung des ersten Betätigungselements einnimmt. In dieser Freigabestellung ist eine Reinigung, ein Austausch oder eine Reparatur der Kameraeinheit 3 durch den Benutzer möglich, weil sich die Kameraeinheit 3 in einer für den Benutzer leicht zugänglichen Position befindet, wie in Figur 4 gezeigt. Die Kameraeinheit 3 muss nach der Betätigung des zweiten Betätigungselements 6 nicht immer einen Online-Betriebsstatus aufweisen, bei welchem der Außenbereich bildlich erfasst und in der im Fahrzeug angeordneten Anzeigevorrichtung visualisiert wird. Man kann dabei zwischen verschiedenen Fällen unterscheiden. Es kann der Fall auftreten, dass der Benutzer während des Einparkvorgangs auf der Anzeigevorrichtung erkennt, dass die Kameraeinheit 3 verschmutzt ist. Nach der Betätigung des zweiten Betätigungselements 6 wird die Kameraeinheit 3 mittels des Antriebselements in die aktive Betriebsstellung bewegt und der Benutzer säubert die ihm leicht zugängliche Kameraeinheit, welche im Winkel α aus der Ausnehmung 5 ragt. Dabei ist die Kameraeinheit 3 allerdings noch im Online-Betrieb und erfasst bildlich den Außenbereich, welcher dann den gerade beim Säuberungsvorgang tätigen Benutzer in der Anzeigevorrichtung visualisiert. Ein anderer Fall ist, wenn der Benutzer sich einem außer Betrieb befindlichen, verschlossenen, parkenden Kraftfahrzeug 1 nähert. Dann befindet sich die Kameraeinheit 3 nach Betätigung des zweiten Betätigungselements 6 in einem Offline-Betrieb, so dass eine Visualisierung des Außenbereichs in der Anzeigevorrichtung ausgeschlossen ist. Dadurch wird in Vorteilhafterweise Strom gespart und die Fahrzeugbatterie wird geschont. Alternativ ist es aber auch möglich, dass im zuletzt genannten Fall die Kameraeinheit 3 nach der Betätigung des zweiten Betätigungselements stets den Online-Betrieb aufweist.

Wie in den Figuren 2 bis 4 zu erkennen ist, ist in dem vorliegenden Ausführungsbeispiel das zweite Betätigungselement 6 als Schutzelement 4 ausgebildet, wobei das Schutzelement 4 gleichzeitig als Heckbetätiger zur Öffnung und/oder Schließung der Heckklappe dient. Alternativ ist es möglich, dass das zweite Betätigungselement 6 als Taste auf einem dem Kraftfahrzeug 1 zugeordneten mobilen Funkschlüssel ausgebildet ist. Ebenfalls besteht die weitere alternative Möglichkeit, das zweite Betätigungselement 6 an einem Armaturenbrett des Kraftfahrzeugs 1 anzuordnen.

Wie in Figur 3 zu erkennen ist, wird durch die Betätigung des zweiten Betätigungselements 6 durch eine Hand 7 des Benutzers ein als elektronisches Schaltelement ausgebildeter Mikroschalter 8 betätigt, welcher über ein Steuergerät das Antriebselement aktiviert, um die Kameraeinheit 3 in die aktive Betriebsstellung zu bewegen. Der am Gehäuse der Kameraeinheit 3 angeordnete Mikroschalter 8 dient aber auch gleichzeitig zur Auslösung einer elektromechanischen Schlosseinheit umfassend mindestens eine Sperrklinke und eine Drehfalle, welche in Wirkverbindung mit einem am Kraftfahrzeug 1 angeordneten Schließbügel stehen. Wenn die Schlosseinheit mittels des Mikroschalters 8 ausgelöst wird, erfolgt der Öffnungsvorgang der Hecklappe 2 und der Benutzer kann manuell die Heckklappe 2 zum Öffnen anheben. Damit eine Dauerbetätigung des Mikroschalters 8 durch das zweite Betätigungselement 6 vermieden wird, ist das als zweites Betätigungselement 6 ausgebildete Schutzelement 4 über ein Federelement 9 um eine zweite Achse 10 schwenkbar gelagert. Das Schutzelement 4 wird daher nach dessen Betätigung mittels der durch das Federelement 9 erzeugten Rückstellkraft wieder zurück in seine Ausgangsposition bewegt. Theoretisch ist es auch möglich, dass der zweite Mikroschalter 8 über das zweite Betätigungselement 6, insbesondere bei einem ruhendem Kraftfahrzeug 1, im Rahmen einer bewussten Handlung zwei Sekunden lang betätigt werden muss, um die Kameraeinheit 3 und das Schutzelement 4 in die aktive und/oder inaktive Betriebsstellung zu bewegen.

Nach der Betätigung des zweiten Betätigungselements 6 verbleibt die Kameraeinheit 3 mittels des Antriebselements in der aktiven Betriebsstellung (siehe Figur 4), so dass eine Reinigung oder Reparatur der Kameraeinheit 3 problemlos möglich ist. Die Kameraeinheit 3 verbleibt in der aktiven Betriebsstellung bis das zweite Betätigungselement 6 wiederholt betätigt wird. Wenn keine wiederholte Betätigung des zweiten Betätigungselements 6 erfolgt, wird die Kameraeinheit 3 nach einer vorbestimmten Zeitdauer, insbesondere nach einer Minute, automatisch ohne eine Betätigung des zweiten Betätigungselements 6 durch den Benutzer wieder selbstständig mittels des Antriebselements zurück in die inaktive Betriebsstellung bewegt. Die Zeitdauer kann aber auch zwischen einer Minute und drei Minuten liegen. Die Zeitdauer sollte auf jeden Fall so gewählt werden, dass ausreichend Zeit bleibt, um die Kameraeinheit 3 zu reinigen. Bei der Reparatur oder dem Austausch der Kameraeinheit 3, beispielsweise bei einer Inspektion in einer Werkstatt, wird die Zeitspanne manuell über eine dem Kraftfahrzeug1 zugeordneten mobilen oder im Kraftfahrzeug 1 angeordneten Eingabevorrichtung eingegeben, so dass die Kameraeinheit 3 für die Dauer der Reparatur in ihrer Freigabestellung verbleibt. Die Kameraeinheit 3 kann aber auch manuell durch den Benutzer durch das Drücken des Schutzelements 4 aus ihrer Freigabestellung wieder zurück in ihre inaktive Betriebsstellung bewegt werden, wenn der Benutzer die Kameraeinheit 3 sofort nach dem Reinigungsvorgang wieder durch das Schutzelement 4 vollständig schützen möchte. Es wäre denkbar, dass dabei der Mikroschalter 8 betätigt wird, welcher über das Steuergerät den Betrieb des Antriebelements auslöst. In diesem Fall könnte der Mikroschalter 8 alternativ am Schutzelement 4 angeordnet sein.

Dann würde aufgrund der Betätigung des Mikroschalters 4 mittels des Schutzelements 4 durch den Benutzer die Kameraeinheit 3 mit Hilfe des Antriebselements wieder zurück in die inaktive Betriebsstellung bewegt werden. Das Schutzelement 4 befände sich dann wieder vor der in der Ausnehmung 5 angeordneten Kameraeinheit 3.

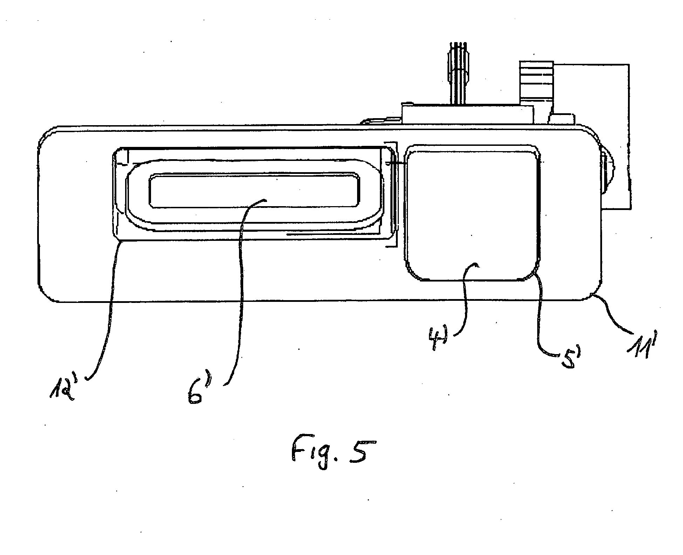

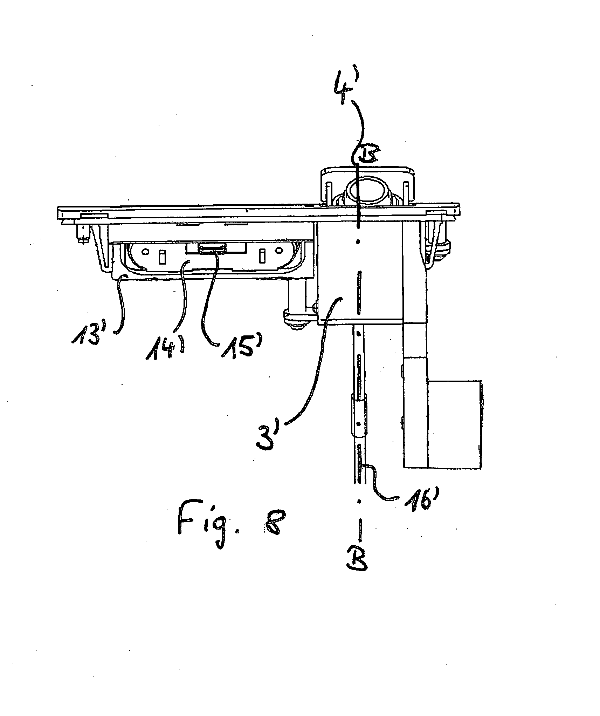

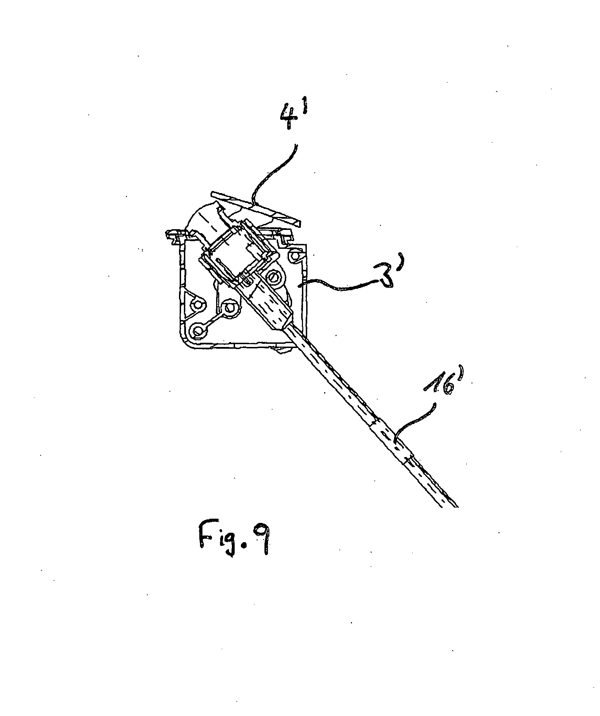

In den Figuren 5 bis 9 ist ein zweites Ausführungsbeispiel der Erfindung gezeigt, welches eine ähnliche Funktionsweise aufweist, wie das erste Ausführungsbeispiel. Im zweiten Ausführungsbeispiel befindet sich die Kameraeinheit 3' in einem als Modul ausgebildeten Gehäuse 11', wobei das Modul in einer nicht gezeigten Ausnehmung der Heckklappe 2 des Kraftfahrzeugs 1 angeordnet ist. Die Kameraeinheit 3' befindet sich in einer ersten Ausnehmung 5' und wird bei der inaktiven Betriebsstellung von einem Schutzelement 4' verdeckt. Das Schutzelement 4' ist wiederum über eine Achse schwenkbar gelagert und mit der Kameraeinheit 3' mechanisch verbunden. Das Modul weist eine zweite Ausnehmung 12' auf, in welcher ein als Heckbetätiger zum Öffnen der Heckklappe 2 ausgebildetes zweites Betätigungselement 6' angeordnet ist. Der Heckbetätiger umfasst im Wesentlichen ein Heckbetätigergehäuse 13', welches eine Aufnahmeschale 14' für einen nicht gezeigten Mikroschalter ausgebildet ist. Die Aufnahmeschale 14' weist Durchgangsöffnungen auf, welche zur Durchführung der elektrischen Leitungen 15' dienen, die den Mikroschalter mit einer nicht gezeigten Steuerungselektronik verbinden. Die Kameraeinheit 3' ist ebenfalls über eine elektrische Leitung 16' mit der Steuerungselektronik verbunden. Innerhalb der Heckklappe 2 ist eine Schlosseinheit mit einem als Mikroschalter ausgebildeten Sensor angeordnet, welcher den Schließzustand bzw. Öffnungszustand der Schlosseinheit erfasst und an die Steuerungselektronik weitergibt. Die Steuerungselektronik ist in dem vorliegenden Ausführungsbeispiel derart programmiert, dass bei einer Betätigung des zweiten Betätigungselements 6' sich die Heckklappe 2 öffnet und die Kameraeinheit 3' in die aktive Betriebsstellung bewegt wird. Dabei wird mittels des zweiten Betätigungselements 6' der im Heckbetätigergehäuse angeordnete Mikroschalter betätigt. Die Steuerungselektronik erhält nach der Betätigung des Mikroschalters das Signal, dass die Heckklappe geöffnet werden soll und steuert die Schlosseinheit an. Die Schlosseinheit wird von einem Schließzustand in einen Öffnungszustand überführt, so dass die Heckklappe 2 aus der geschlossenen Stellung in eine geöffnete Stellung überführt werden kann. Dabei erfasst der Sensor der Schlosseinheit, dass sich diese in einem Öffnungszustand befindet. Dieses vom Sensor der Schlosseinheit erfasste Signal wird an die Steuerungselektronik weitergegeben. Wenn die Steuerungselektronik den Öffnungszustand der Schlosseinheit erfasst hat, wird die Antriebseinheit der Kameraeinheit 3' vom Steuergerät angesteuert und die Kameraeinheit 3' wird mittels des Antriebselements in die aktive Reinigungsstellung bewegt. Der Benutzer kann dann die Kameraeinheit 3' problemlos reinigen, weil diese, wie in Figur 8 und 9 gezeigt, für ihn leicht zugänglich ist. Wie bereits beim ersten Ausführungsbeispiel beschrieben, kann alternativ die Kameraeinheit 3' erst dann in die aktive Betriebsstellung bewegt werden, wenn der Benutzer den Heckbetätiger mindestens zwei Sekunden lang gedrückt hält. Die Steuerungselektronik erkennt die bewusste Handlung des Benutzers und aktiviert das Antriebselement, welches die Kameraeinheit 3' zum Reinigen in die aktive Betriebstellung bewegt. Bei der zwei Sekunden langen andauernden Betätigung ist es nicht zwingend erforderlich, dass sich die Heckklappe 2 öffnet.

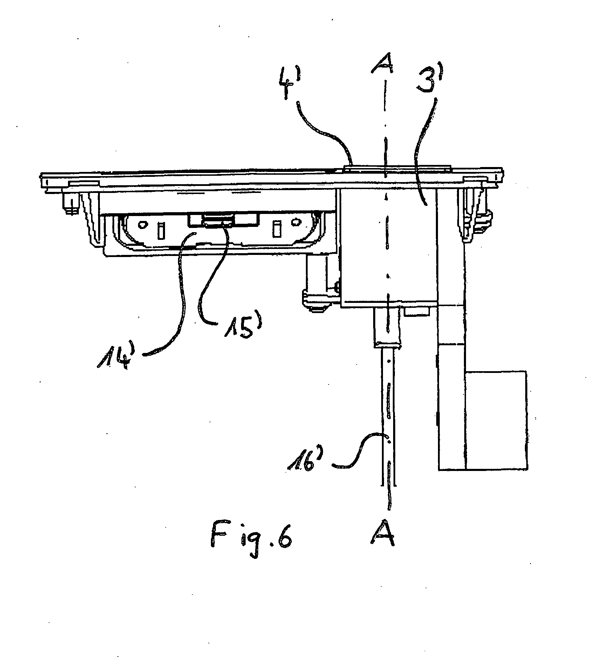

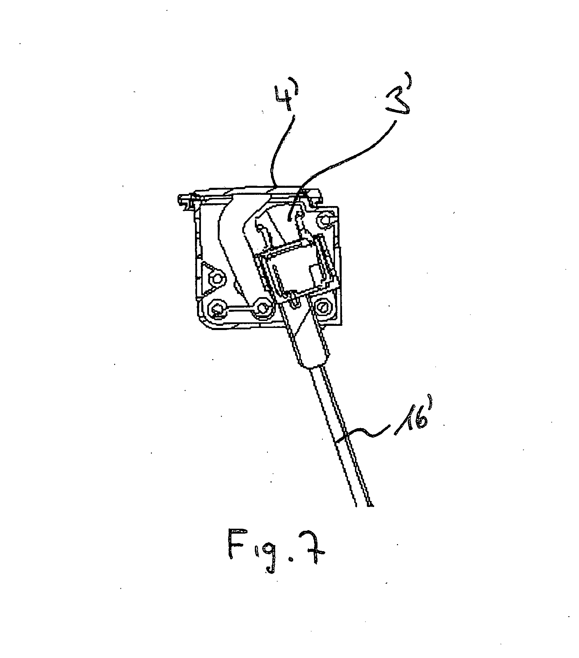

Nachdem der Reinigungsvorgang abgeschlossen ist, wird die Heckklappe 2 manuell durch den Benutzer wieder betätigt, indem er beispielsweise die Heckklappe 2 mit seiner Hand in Richtung Bodenebene drückt. Der Sensor der Schlosseinheit erfasst den Schließzustand der Schlosseinheit und leitet das Signal an die Steuerungselektronik weiter. Die Steuerungselektronik wertet das Signal aus und steuert das Antriebselement der Kameraeinheit 3' an. Die Kameraeinheit 3' wird durch das Antriebselement zurück in die in Figur 6 und 7 dargestellte inaktive Betriebsstellung zurückbewegt. Es wird in Vorteilhafterweise ein in der Schlosseinheit angeordneter und aus dem Stand der Technik bekannter Sensor benutzt, um die Kameraeinheit 3' in die aktive bzw. inaktive Betriebsstellung zu bewegen. Es muss lediglich die Steuerungselektronik umprogrammiert werden. Dadurch kann auf kostengünstige Art und Weise die Kameraeinheit 3' problemlos und einfach gereinigt werden.

Alternativ ist es auch möglich, dass der Heckklappe 2 ein Motor zugeordnet ist, der die Heckklappe 2 in den Offnungs- bzw. Schließzustand bringt. Der Motor wird nach der Betätigung eines Motorbetätigungselements zur Ansteuerung des Motors aktiviert. Bei einer Betätigung des Motorbetätigungselements wird die Kameraeinheit 3' in eine aktive oder inaktive Betriebsstellung bewegt. Ebenfalls ist es denkbar, dass die Heckklappe 2 mittels eines in einem Stoßfänger oder in der Heckklappe 2 angeordneten als Fußschalter ausgebildeten kapazitiven Sensors geöffnet bzw. geschlossen wird. Dabei bewegt der Benutzer seinen Fuß unterhalb des Stoßfängers und/oder in seinen unmittelbaren Umgebungsbereich. Der kapazitive Sensor erkennt den Fuß des Benutzers und gibt ein Signal an die Steuerungselektronik weiter. Die Steuerungselektronik steuert das Antriebselement der Kameraeinheit 3' an und die Kameraeinheit 3' wird in die aktive oder inaktive Betriebsstellung bewegt. Der kapazitive Sensor kann auch verwendet werden, um die Hecklappe 2 in eine Öffnungs-/Schließstellung zu bringen. Die Heckklappe 2 kann dabei mittels eines als Motor oder Kraftspeicher ausgebildeten Antriebselements bewegt werden.

Ferner sind weitere Ausgestaltungen des Gegenstandes der Erfindung möglich, so dass das Antriebselement als Kraftspeicher, insbesondere als Federelement, ausgebildet ist. Auch können der Elektromotor und der Kraftspeicher gemeinsam das Antriebselement bilden. Ebenfalls ist es möglich dass, die Kameraeinheit 3 starr und unbeweglich in der Ausnehmung angeordnet ist, so dass das Schutzelement 4 in eine aktive oder inaktive Betriebsstellung bewegbar ist, um die Kameraeinheit 3 in die Freigabestellung zur Erfassung des Außenbereichs zu bewegen. Eine weitere Möglichkeit besteht darin, dass das Gehäuse der Kameraeinheit 3 als Schutzelement 4 ausgebildet ist. Die Kameraeinheit 3 kann aber auch aus der in der Hecklappe 2 angeordneten Ausnehmung 5 verschwenkbar ausgebildet sein. Alternativ wäre es ferner möglich, dass die Kameraeinheit 3 aus der in einem vorderen und/oder hinteren Stoßfänger angeordneten Ausnehmung 5 verschwenkbar ist. Anstatt des Mikroschalters 8 könnte auch ein kapazitiver Sensor verwendet werden, welcher auf dem Schutzelement 4 angeordnet ist. Dabei kann die Kameraeinheit erst nach einer zweiten Betätigung des kapazitiven Fußschalters in ihre Freigabestellung bewegbar ausgebildet sein.

### Bezugszeichenliste

- 1: Kraftfahrzeug
- 2: Heckklappe
- 3, 3': Kameraeinheit
- 4, 4': Schutzelement
- 4.1: erste Achse
- 5, 5': Ausnehmung
- 6, 6': zweites Betätigungselement
- 7: Hand eines Benutzers
- 8: Mikroschalter
- 9: Federelement
- 10: zweite Achse
- 11': Gehäuse
- 12': zweite Ausnehmung
- 13': Heckbetätigergehäuse
- 14': Aufnahmeschale
- 15': elektrische Leitungen

## Patentansprüche

1. Kraftfahrzeug (1) mit einer Kameraeinheit (3, 3'), mit einem Schutzelement (4, 4'), zur bildlichen Erfassung eines Außenbereichs, die über ein Steuergerät mit einer innerhalb des Kraftfahrzeugs (1) angeordneten Anzeigevorrichtung verbunden ist,
wobei die Kameraeinheit (3, 3') in einer inaktiven Betriebsstellung mittels des Schutzelements (4, 4') verdeckt innerhalb einer am Kraftfahrzeug (1) vorgesehenen Ausnehmung (5, 5') angeordnet ist,
und die Kameraeinheit (3, 3') und/oder das Schutzelement (4, 4') nach einer Aktivierung eines ersten Betätigungselements, insbesondere durch die Aktivierung des als ersten Betätigungselement ausgebildeten Rückwärtsgangs des Kraftfahrzeugs (1), durch ein Antriebselement in eine aktiven Betriebsstellung zur bildlichen Erfassung des Außenbereichs dienenden Freigabestellung bewegbar ist, wobei bei der Freigabestellung sich die Kameraeinheit (3, 3') in der aktiven Betriebsstellung befindet, in welcher die bildliche Erfassung des Außenbereichs möglich ist, und mindestens ein zweites Betätigungselement (6, 6') vorgesehen ist, wobei die Kameraeinheit (3, 3') und/oder das Schutzelement (4, 4') nach einer Aktivierung des zweiten Betätigungselements (6, 6') durch das Antriebselement in die zur bildlichen Erfassung des Außenbereichs geeigneten Freigabestellung bewegbar ist,
**dadurch gekennzeichnet, dass**
das zweite Betätigungselement (6, 6') durch den Benutzer nur außerhalb des Kraftfahrzeugs (1) betätigbar ist.

2. Kraftfahrzeug (1) nach Anspruch 1, **dadurch gekennzeichnet, dass** die Kameraeinheit (3, 3') und/oder das Schutzelement (4, 4') durch die Betätigung des zweiten Betätigungselements (6, 6') mittels des Antriebselements in der Freigabestellung verbleibt.

3. Kraftfahrzeug (1) nach Anspruch 1 oder 2, **dadurch gekennzeichnet, dass** bei der Betätigung des zweiten Betätigungselements (6, 6') das Kraftfahrzeug (1) einen ruhenden Zustand aufweist.

4. Kraftfahrzeug (1) nach einem der Ansprüche 1 bis 3, **dadurch gekennzeichnet, dass** das Antriebselement als Elektromotor ausgebildet ist.

5. Kraftfahrzeug (1) nach einem der Ansprüche 1 bis 4, **dadurch gekennzeichnet, dass** das Antriebselement als ein Kraftspeicher ausgebildet ist.

6. Kraftfahrzeug (1) nach einem der Ansprüche 1 bis 5, **dadurch gekennzeichnet, dass** das zweite Betätigungselement (6, 6') an einer Tür oder Klappe, insbesondere an einer Heckklappe (2) angeordnet ist.

7. Kraftfahrzeug (1) nach Anspruch 6, **dadurch gekennzeichnet, dass** das zweite Betätigungselement (6, 6') als ein Heckbetätiger ausgebildet ist, welcher zur Öffnung der Heckklappe (2) dient.

8. Kraftfahrzeug (1) nach einem der Ansprüche 1 bis 7, **dadurch gekennzeichnet, dass** das Schutzelement (4, 4') als zweites Betätigungselement (6, 6') ausgebildet ist.

9. Kraftfahrzeug (1) nach Anspruch 8, **dadurch gekennzeichnet, dass** das Schutzelement (4, 4') als Heckbetätiger ausgebildet ist.

10. Kraftfahrzeug (1) nach einem der der Ansprüche 1 bis 9, **dadurch gekennzeichnet, dass** das zweite Betätigungselement (6, 6') als Taste auf einem dem Kraftfahrzeug (1) zugeordneten mobilen Funkschlüssel ausgebildet ist.

11. Kraftfahrzeug (1) nach einem der Ansprüche 1 bis 10, **dadurch gekennzeichnet, dass** zur Aktivierung des Antriebselements ein Drücken des zweiten Betätigungselements (6, 6') von mindestens ein bis zwei Sekunden erforderlich ist.

12. Kraftfahrzeug (1) nach einem der Ansprüche 1 bis 11 **dadurch gekennzeichnet**, die Kameraeinheit (3, 3') und/oder das Schutzelement (4, 4') durch die wiederholte Betätigung des zweiten Betätigungselements (6, 6') durch das Antriebselement zurück in die inaktive Betriebsstellung bewegbar ist.

13. Kraftfahrzeug (1) nach einem der Ansprüche 1 bis 12, **dadurch gekennzeichnet, dass** nach einer vorbestimmten Zeitdauer, insbesondere nach mindestens drei Minuten, ohne eine Betätigung des zweiten Betätigungselements (6, 6') die Kameraeinheit (3, 3') und/oder das Schutzelement (4, 4') durch das Antriebselement zurück in die inaktive Betriebsstellung bewegbar ist.

14. Kraftfahrzeug (1) nach einem der Ansprüche 1 bis 13, **dadurch gekennzeichnet, dass** die Kameraeinheit (3, 3') ohne eine Betätigung des zweiten Betätigungselements beim Schließen der Heckklappe selbstständig in ihre inaktive Betriebsstellung bewegbar ist.

15. Kraftfahrzeug (1) nach einem der Ansprüche 1 bis 14, **dadurch gekennzeichnet, dass** das zweite Betätigungselement (6,6') als kapazitiver Sensor, insbesondere als kapazitiver Fußschalter, ausgebildet ist, welcher in der Heckklappe (2) oder im Stoßfänger angeordnet ist.

16. Kraftfahrzeug (1) nach Anspruch 15, **dadurch gekennzeichnet, dass** die Kameraeinheit (3,3') erst nach einer zweiten Betätigung des kapazitiven Fußschalters in ihre Freigabestellung bewegbar ist.

## Claims

1. Motor vehicle (1) with a camera unit (3, 3'), with a protection element (4, 4') for capturing images of an external area, which is connected to a display device inside the motor vehicle (1),
wherein the camera unit (3, 3') is covered by the protection element (4, 4') inside a recess (5, 5') provided on the motor vehicle (1) when in an inactive operating position,
and after activation of a first actuating element, particularly by the activation of the reverse gear of the motor vehicle (1), which is designed as the first actuating element, the camera unit (3, 3') and/or the protective element (4, 4') is movable into a release position serving as an active operating position for capturing images of the external area by means of a drive element, wherein in the release position the camera unit (3, 3') is in the active operating position, in which the capture of images of the external area is possible, and
at least one second actuating element (6, 6') is provided, wherein the camera unit (3, 3') and/or the protection element (4, 4') is movable by the drive element into the release position suitable for capturing images of the external area after activation of the second actuating element (6, 6'),
**characterised in that**
the second actuating element (6, 6') is only operable by the user outside the motor vehicle (1).

2. Motor vehicle (1) according to claim 1, **characterised in that** the camera unit (3, 3') and/or the protection element (4, 4') remains in the release position due to the operation of the second actuating element (6, 6') by means of the drive element.

3. Motor vehicle (1) according to claim 1 or 2, **characterised in that** when the second actuating element (6, 6') is operated the motor vehicle (1, 1') is in an inactive state.

4. Motor vehicle (1) according to any one of claims 1 to 3, **characterised in that** the drive element is an electric motor.

5. Motor vehicle (1) according to any one of claims 1 to 4, **characterised in that** the drive element is an energy accumulator.

6. Motor vehicle (1) according to any one of claims 1 to 5, **characterised in that** the second actuating element (6, 6') is located on a door or lid, particularly a rear lid (2).

7. Motor vehicle (1) according to claim 6, **characterised in that** the second actuating element (6, 6') has the form of a lid actuator, which serves to open the rear lid (2).

8. Motor vehicle (1) according to any one of claims 1 to 7, **characterised in that** the protection element (4, 4') has the form of the second actuating element (6, 6').

9. Motor vehicle (1) according to claim 8, **characterised in that** the protection element (4, 4') has the form of a lid actuator.

10. Motor vehicle (1) according to any one of claims 1 to 9, **characterised in that** the second actuating element (6, 6') has the form of a button on a mobile wireless key that is assigned to the motor vehicle (1).

11. Motor vehicle (1) according to any one of claims 1 to 10, **characterised in that** in order to activate the drive element it is necessary to press the second actuating element (6, 6') for at least one to two seconds.

12. Motor vehicle (1) according to any one of claims 1 to 11, **characterised in that** the camera unit (3, 3') and/or the protection element (4, 4') can be moved back into the inactive operating position by the drive element by repeated actuation of the second actuating element (6, 6').

13. Motor vehicle (1) according to any one of claims 1 to 12, **characterised in that** the camera unit (3, 3') and/or the protection element (4, 4') can be moved back into the inactive operating position by the drive element without actuation of the second actuating element (6, 6') after a predetermined period of inactivity, particularly after at least three minutes.

14. Motor vehicle (1) according to any one of claims 1 to 13, **characterised in that** the camera unit (3, 3') can be moved back into its inactive operating position automatically, without actuation of the second actuating element (6, 6'), by the act of closing the rear lid.

15. Motor vehicle (1) according to any one of claims 1 to 14, **characterised in that** the second actuating element (6, 6') has the form of a capacitive sensor, particularly a capacitive footswitch, which is located in the rear lid (2) or in the bumper.

16. Motor vehicle (1) according to claim 15, **characterised in that** the camera unit (3, 3') cannot be moved into its release position until the capacitive footswitch has been actuated a second time.

## Revendications

1. Véhicule automobile (1) comportant une unité de caméra (3, 3') avec un élément de protection (4, 4') pour l'imagerie d'une zone extérieure, qui est reliée par l'intermédiaire d'un appareil de commande avec un dispositif d'affichage disposé à l'intérieur du véhicule (1),
dans lequel l'unité de caméra (3, 3') dans une position de fonctionnement inactive est disposée à l'intérieur d'un évidement (5, 5') sur le véhicule automobile (1) en étant couverte au moyen de l'élément de protection (4, 4'),
et l'unité de caméra (3, 3') et/ou l'élément de protection (4, 4') après une activation d'un premier élément d'actionnement, notamment par l'action de la marche arrière du véhicule automobile (1) conçue comme un premier élément d'actionnement, peut être déplacée par un élément d'entraînement dans une position de dégagement servant à l'imagerie de la zone extérieure dans une position de fonctionnement active, dans lequel dans la position de dégagement l'unité de caméra (3, 3') se trouve dans la position de fonctionnement active, dans laquelle l'imagerie de la zone extérieure est possible et
au moins un deuxième élément d'actionnement (6, 6') est prévu, dans lequel l'unité de caméra (3, 3') et/ou l'élément de protection (4, 4') après une activation du deuxième élément d'actionnement (6, 6') peut être déplacé par l'élément d'entraînement dans la position de dégagement appropriée pour l'imagerie de la zone extérieure,
**caractérisé en ce que**
un deuxième élément d'actionnement (6, 6') peut être actionné par l'utilisateur seulement à l'extérieur du véhicule (1).

2. Véhicule automobile (1) selon la revendication 1, **caractérisé en ce que** l'unité de caméra (3, 3') et/ou l'élément de protection (4, 4') reste dans la position de dégagement par l'actionnement du deuxième élément d'actionnement (6, 6') au moyen de l'élément d'entraînement.

3. Véhicule automobile (1) selon la revendication 1 ou 2, **caractérisé en ce que** lors de l'actionnement du deuxième élément d'actionnement (6, 6') le véhicule automobile (1) présente un état au repos.

4. Véhicule automobile (1) selon une des revendications 1 à 3, **caractérisé en ce que** l'élément d'entraînement est conçu comme un moteur électrique.

5. Véhicule automobile (1) selon une des revendications 1 à 4, **caractérisé en ce que** l'élément d'entraînement est conçu comme un accumulateur de force.

6. Véhicule automobile (1) selon une des revendications 1 à 5, **caractérisé en ce que** le deuxième élément d'actionnement (6, 6') est disposé sur une porte ou un abattant, notamment sur un hayon arrière (2).

7. Véhicule automobile (1) selon la revendication 6, **caractérisé en ce que** le deuxième élément d'actionnement (6, 6') est conçu comme un actionneur arrière, qui sert à ouvrir le hayon arrière (2).

8. Véhicule automobile (1) selon une des revendications 1 à 7, **caractérisé en ce que** l'élément d'actionnement (4, 4') est conçu comme un deuxième élément d'actionnement (6, 6').

9. Véhicule automobile (1) selon la revendication 8, **caractérisé en ce que** l'élément de protection (4, 4') est conçu comme un actionneur arrière.

10. Véhicule automobile (1) selon une des revendications 1 à 9, **caractérisé en ce que** le deuxième élément d'actionnement (6, 6') est conçu comme une touche sur une radiocommande mobile coordonnée au véhicule automobile (1).

11. Véhicule automobile (1) selon une des revendications 1 à 10, **caractérisé en ce que** pour activer l'élément d'actionnement une pression sur le deuxième élément d'actionnement (6, 6') d'au moins une à deux secondes est nécessaire.

12. Véhicule automobile (1) selon une des revendications 1 à 11, **caractérisé en ce que** l'unité de caméra (3, 3') et/ou l'élément de protection (4, 4') peut être déplacé de manière à revenir dans la position de fonctionnement inactive par l'actionnement répété du deuxième élément d'actionnement (6, 6') par l'intermédiaire de l'élément d'entraînement.

13. Véhicule automobile (1) selon une des revendications 1 à 12, **caractérisé en ce que** après une durée temporelle prescrite, notamment après au moins trois minutes, sans un actionnement du deuxième élément d'actionnement (6, 6') l'unité de caméra (3, 3') et/ou l'élément de protection (4, 4') peut être déplacé par l'élément d'entraînement de manière à revenir dans la position de fonctionnement inactive.

14. Véhicule automobile (1) selon une des revendications 1 à 13, **caractérisé en ce que** l'unité de caméra (3, 3') sans un actionnement du deuxième élément d'actionnement peut être déplacée de manière autonome dans la position de fonctionnement inactive lors de la fermeture du hayon arrière.

15. Véhicule automobile (1) selon une des revendications 1 à 14, **caractérisé en ce que** le deuxième élément d'actionnement (6, 6') est conçu comme un capteur capacitif, notamment comme une commande à pédale capacitive, qui est disposé dans le hayon arrière (2) ou dans le pare-chocs.

16. Véhicule automobile (1) selon la revendication 15, **caractérisé en ce que** l'unité de caméra (3, 3') peut être déplacée dans sa position de dégagement seulement après un deuxième actionnement de la commande à pédale capacitive.
